# EUROPÄISCHE PATENTANMELDUNG

(11) **EP 4 484 309 A2**
(43) Veröffentlichungstag der Anmeldung: **01.01.2025**
(21) Anmeldenummer: 24179717.4
(22) Anmeldetag: 03.06.2024
(51) Int. Cl.: B65C 3/14, B65C 9/00, B41J 3/407

(54) **VORRICHTUNG ZUM KENNZEICHNEN VON BEHÄLTERN UND ZUGEHÖRIGES BETRIEBSVERFAHREN**

(30) Priorität: 05.06.2023 DE 102023114693
(71) Anmelder: KRONES AG, 93073 Neutraubling (DE)
(72) Erfinder: LAUTERBACH, Florian, 93073 Neutraubling (DE); SCHNEIDER, Helmut, 93073 Neutraubling (DE); FRANKERL, Juergen, 93073 Neutraubling (DE); LINDNER, Peter, 93073 Neutraubling (DE); KRAUS, Andreas, 93073 Neutraubling (DE); MEISSNER, Soeren, 93073 Neutraubling (DE); BRAATZ, Bernd, 93073 Neutraubling (DE); MAYER, Josef, 93073 Neutraubling (DE)
(74) Vertreter: v. Bezold & Partner Patentanwälte - PartG mbB

(57) **Zusammenfassung**

Die Erfindung betrifft u.a. eine Vorrichtung (28) zum Kennzeichnen von Behältern (12) für eine Behälterbehandlungsanlage. Die Vorrichtung (28) weist einen Behälterförderer (30) zum Transportieren der Behälter (12) auf. Die Vorrichtung (28) weist eine Kupplungseinheit (38), ein Etikettiermodul (40) und ein Lasermarkierungsmodul (42) auf. Das Etikettiermodul (40) und das Lasermarkierungsmodul (42) sind miteinander austauschbar an die Kupplungseinheit (38) kuppelbar. Vorteilhaft kann die Vorrichtung (28) besonders flexibel eingesetzt werden, da das Etikettiermodul (40) und das Lasermarkierungsmodul (42) an die gleiche Kupplungseinheit (38) kuppelbar sind, sodass die Vorrichtung (28) flexibel und bedarfsweise zum Etikettieren mit dem Etikettiermodul (40) oder zum Lasermarkieren mit dem Lasermarkierungsmodul (42) eingesetzt werden kann.

## Beschreibung

### Technisches Gebiet

Die Erfindung betrifft eine Vorrichtung zum Kennzeichnen von Behältern. Die Erfindung betrifft ferner ein Verfahren zum Betreiben einer Vorrichtung zum Kennzeichnen von Behältern.

### Technischer Hintergrund

Herkömmlich werden Behälter mehrheitlich mit Etiketten ausgestattet. Typische Varianten sind Papier- oder Kunststoffetiketten, welche mit Heiß- oder Kaltleim oder auch selbstklebend verarbeitet und auf die Behälter aufgebracht werden. Etiketten können im Recyclingprozess problematisch sein, z. B. wegen der verwendeten Drucktinte, wasserfeste Papiere, Leim usw.

Im Prinzip ist es daher wünschenswert, komplett auf Etiketten zu verzichten. Erforderliche Informationen könnten bspw. direkt über ein Lasermarkierungssystem auf die Behälter markiert bzw. geschrieben werden. Eine solche Technik wird bspw. bereits zum Lasermarkieren einer Produktionsnummer oder eines Mindesthaltbarkeitsdatums genutzt. Beim Lasermarkieren kann durch den Laserstrahl und die damit auf der Oberfläche des Behälters entstehende Wärme eine physikalische Veränderung der Oberfläche des Behälters bewirkt werden (z. B. Weißbruch bei PET-Behältern), sodass gewünschte Zeichen auf die Oberfläche lasermarkiert werden können.

Der Erfindung liegt die Aufgabe zu Grunde, eine flexiblere Technik zum Kennzeichnen von Behältern für eine Behälterbehandlungsanlage zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung, vorzugsweise Rundläufer-Vorrichtung, zum Kennzeichnen von Behältern für eine Behälterbehandlungsanlage. Die Vorrichtung weist einen Behälterförderer, vorzugsweise Rundläufer-Behälterförderer, zum Transportieren der Behälter auf. Die Vorrichtung weist ferner eine Kupplungseinheit und ein Etikettiermodul, das zum Applizieren von Etiketten auf die von dem Behälterförderer transportierten Behälter an die Kupplungseinheit kuppelbar ist, auf. Die Vorrichtung weist ferner ein Lasermarkierungsmodul auf, das zum Lasermarkieren der von dem Behälterförderer transportierten Behälter an die Kupplungseinheit kuppelbar ist. Das Etikettiermodul und das Lasermarkierungsmodul sind miteinander austauschbar an die Kupplungseinheit kuppelbar.

Vorteilhaft kann die Vorrichtung besonders flexibel eingesetzt werden, da das Etikettiermodul und das Lasermarkierungsmodul an die gleiche Kupplungseinheit kuppelbar sind, sodass die Vorrichtung flexibel und bedarfsweise zum Etikettieren mit dem Etikettiermodul oder zum Lasermarkieren mit dem Lasermarkierungsmodul eingesetzt werden kann. Der Wechsel zwischen Etikettiermodul und Lasermarkierungsmodul kann durch den modularen Aufbau und die Kupplungseinheit vergleichsweise schnell und einfach erfolgen. Vorteilhaft kann damit beispielsweise ein erstes Produkt mit Etiketten von dem Etikettiermodul ausgestattet werden, und nach einem Wechsel der Module kann einfach ein zweites Produkt mit einer Lasermarkierung von dem Lasermarkierungsmodul gekennzeichnet werden. Vorteilhaft ermöglicht diese Technik auch, dass bereits im Betrieb befindliche Vorrichtungen mit Kupplungseinheit(en) und Etikettiermodul(en) einfach zum Lasermarkieren nachgerüstet werden können, da das Lasermarkierungsmodul an die bereits vorhanden(en) Kupplungseinheit(en) passt. Vorteilhaft kann somit auch ein vergleichsweise aufwandsarmer Übergang zu vollständig etikettenlosen Behältern erreicht werden.

Vorzugsweise kann eine Lasermarkierung, die von dem Lasermarkierungsmodul aufgebracht wird, ein Dekor, eine Dekorfläche, mindestens ein Zeichen und/oder eine ein- oder mehrzeilige Zeichenfolge aufweisen.

In einem Ausführungsbeispiel weist die Vorrichtung ferner (mindestens) eine weitere Kupplungseinheit auf, die bezüglich einer Behältertransportrichtung des Behälterförderers vor oder hinter der Kupplungseinheit angeordnet ist. Die Vorrichtung weist ferner (mindestens) ein weiteres Lasermarkierungsmodul auf, das zum Lasermarkieren der von dem Behälterförderer transportierten Behälter an die (mindestens eine) weitere Kupplungseinheit kuppelbar ist Optional können die Kupplungseinheit und die (mindestens eine) weitere Kupplungseinheit baugleich sein. Optional können das Lasermarkierungsmodul und das (mindestens eine) weitere Lasermarkierungsmodul baugleich sein. Vorteilhaft kann durch das Ankuppeln zusätzlicher Lasermarkierungsmodule eine Leistung (=lasermarkierte Behälter pro Stunde) der Vorrichtung flexibel erhöht werden und letztlich auch die Produktion von komplett etikettenlosen und lediglich lasermarkierten Behältern mit hoher Leistung ermöglicht werden.

Vorzugsweise kann mindestens ein Markierkopf des Lasermarkierungsmoduls eine Relativposition zu dem Behälterförderer, wenn das Lasermarkierungsmodul an die Kupplungseinheit angekuppelt ist, aufweisen, die sich von einer Relativposition zwischen mindestens einem weiteren Markierkopf des weiteren Lasermarkierungsmoduls zu dem Behälterförderer, wenn das weitere Lasermarkierungsmodul an die weitere Kupplungseinheit angekuppelt, unterscheidet. Vorteilhaft können die Lasermarkierungsmodule somit unterschiedliche Bereiche der Behälter nacheinander lasermarkieren, um bspw. auch großformatige und/oder viele Zeichen umfassende Lasermarkierungen mit einer großen Leistung (=lasermarkierte Behälter pro Stunde) zu verarbeiten.

Vorzugsweise kann die Vorrichtung (mindestens) ein weiteres Etikettiermodul, das zum Applizieren von Etiketten auf die von dem Behälterförderer transportierten Behälter an die (mindestens eine) weitere Kupplungseinheit kuppelbar ist, aufweisen. Das (mindestens eine) weitere Etikettiermodul und das (mindestens eine) weitere Lasermarkierungsmodul können miteinander austauschbar an die (mindestens eine) weitere Kupplungseinheit kuppelbar sein.

Es ist auch möglich, dass an der Vorrichtung bspw. ein Etikettiermodul und ein Lasermarkierungsmodul an einer jeweiligen Kupplungseinheit angekuppelt sind. Vorteilhaft können durch die Kombination von Etikettier- und Lasermarkierungsmodul in einer Vorrichtung kombinierte Dekorationen ermöglicht werden.

In einem weiteren Ausführungsbeispiel weisen das Etikettiermodul und/oder das Lasermarkierungsmodul Rollen zum Bewegen über einen Untergrund auf. Vorteilhaft kann das jeweilige Modul somit auf einfache Weise zu der Kupplungseinheit und weg von der Kupplungseinheit bewegt werden.

In einer Ausführungsform ist die Kupplungseinheit dazu ausgebildet, dass das Etikettiermodul beim Ankuppeln an die Kupplungseinheit angehoben wird und/oder dass das Lasermarkierungsmodul beim Ankuppeln an die Kupplungseinheit angehoben wird. Vorteilhaft kann damit eine sehr genaue Positionierung des jeweiligen Moduls erreicht und der Einfluss von Bodenunebenheiten usw. auf die Positioniergenauigkeit eliminiert werden.

In einer weiteren Ausführungsform weist das Lasermarkierungsmodul einen bewegbaren Modulwagen und ein Lasermarkierungssystem zum Lasermarkieren, das vorzugsweise als ein wechselbares Submodul auf dem Modulwagen angeordnet (und z. B. gesichert, vorzugsweise mit einem Schnellverschluss oder einem werkzeuglosen Schnellwechselsystem) ist, auf. Vorteilhaft kann damit die Flexibilität weiter gesteigert werden, da für unterschiedliche Lasermarkierungsaufgaben bspw. unterschiedliche Lasermarkierungssysteme als Submodul schnell und einfach auf dem Modulwagen angeordnet und gesichert werden können.

Vorzugsweise kann das Etikettiermodul einen bewegbaren Modulwagen aufweisen, der baugleich mit dem Modulwagen des Lasermarkierungsmoduls ist. Vorteilhaft kann auf diese Weise eine Flexibilität des Modulkonzepts weiter erhöht werden.

In einer weiteren Ausführungsform weist das Lasermarkierungsmodul mindestens einen Markierkopf zum Lasermarkieren der Behälter auf, wobei eine Position des mindestens einen Markierkopfes (z. B. manuell oder motorisch) verstellbar ist, vorzugsweise höhenverstellbar, quer zu einer Transportrichtung des Behälterförderers und/oder längs zu einer Transportrichtung des Behälterförderers und/oder radial zum Behälterförderer. Vorteilhaft kann das Lasermarkierungsmodul somit anpassbar sein, z. B. um eine gewünschte Entfernung zu dem zu lasermarkierenden Behälter einstellen zu können, um unterschiedliche Bereiche von Behältern lasermarkieren zu können oder um das Lasermarkierungsmodul an unterschiedliche Behälterformate anpassen zu können.

In einer weiteren Ausführungsvariante weist das Lasermarkierungsmodul mehrere Markierköpfe zum Lasermarkieren unterschiedlicher Bereiche der Behälter auf. Optional können die mehreren Markierköpfe übereinander oder seitlich nebeneinander angeordnet sein. Alternativ oder zusätzlich können sich die mehreren Markierköpfe eine Laserquelle und/oder weitere Peripherie, wie beispielsweise ein Kühlsystem (z. B. die hierin offenbarte Kühleinrichtung), teilen. Vorteilhaft können auf diese Weise mit großer Leistung (= lasermarkierte Behälter pro Stunde) auch sehr großformatige und/oder verteilt angeordnete Lasermarkierungen auf die Behälter aufgebracht werden.

In einem Ausführungsbeispiel weist das Lasermarkierungsmodul eine Absaugeinrichtung zum Absaugen von beim Lasermarkieren entstehenden Dämpfen auf. Vorteilhaft kann damit eine weitere Funktionalität in das Lasermarkierungsmodul integriert werden, wobei die integrierte Absaugeinrichtung Verunreinigungen der Vorrichtung und der Behälter durch die Dämpfe verhindern kann.

In einer Ausführungsform weist das Lasermarkierungsmodul eine Kühleinrichtung (z. B. Luft-Kühleinrichtung, Flüssigkeit-Kühleinrichtung oder Elektro-Kühleinrichtung) auf, die zum Kühlen (mindestens) einer Laserquelle des Lasermarkierungsmoduls mit der (mindestens einen) Laserquelle wärmeübertragend verbunden ist, vorzugsweise zum Kühlen der Laserquelle mit Kühlwasser. Vorteilhaft kann damit eine weitere Funktionalität in das Lasermarkierungsmodul integriert werden, wobei die integrierte Kühleinrichtung ermöglicht, auch vergleichsweise starke Laserquellen zu verwenden und/oder die Lebensdauer der Laserquelle zu verlängern.

In einem weiteren Ausführungsbeispiel weist das Lasermarkierungsmodul eine Reinigungseinrichtung zum automatischen Reinigen einer Fokussiereinrichtung des Lasermarkierungsmoduls auf. Vorteilhaft kann damit eine weitere Funktionalität in das Lasermarkierungsmodul integriert werden, wobei die integrierte Reinigungseinrichtung eine gleichbleibende Qualität der Lasermarkierungen der Behälter unterstützen kann.

In einer weiteren Ausführungsform weist das Lasermarkierungsmodul eine, vorzugsweise kameragestützte, Erfassungseinrichtung zum behälterindividuellen Erfassen einer Position und/oder Orientierung eines Markierungsbereichs der Behälter zum Anpassen des Lasermarkierens an die erfasste Position und/oder Orientierung auf. Vorteilhaft kann damit eine weitere Funktionalität in das Lasermarkierungsmodul integriert werden, wobei die integrierte Erfassungseinrichtung eine Positioniergenauigkeit der Lasermarkierung im jeweiligen Markierungsbereich der Behälter verbessern kann.

In einer Ausführungsvariante weist das Lasermarkierungsmodul ein Laserschutzgehäuse zum Abschirmen des Laserkennzeichnens der Behälter auf. Vorteilhaft kann damit eine weitere Funktionalität in das Lasermarkierungsmodul integriert werden, wobei das integrierte Laserschutzgehäuse Verletzungen von Bedienern durch den Laserstrahl bei unsachgemäßer Benutzung verhindern kann.

In einer weiteren Ausführungsvariante ist das Laserschutzgehäuse oder zumindest ein Teil (z. B. eine Klappe, eine Tür oder ein Fenster) davon zwischen einer Betriebsposition und einer Wartungsposition, vorzugsweise geführt, (z. B. manuell oder automatisch) bewegbar, vorzugsweise anhebbar und absenkbar. Vorteilhaft kann damit die Ergonomie wesentlich verbessert werden.

In einem Ausführungsbeispiel weist das Lasermarkierungsmodul eine, vorzugsweise mechanische und/oder elektronische, Verriegelungseinrichtung zum Verriegeln des Laserschutzgehäuses oder zumindest eines Teils davon in der Betriebsposition auf. Optional kann die Verriegelungseinrichtung dazu ausgebildet sein, das Laserschutzgehäuse oder zumindest einen Teil davon in der Betriebsposition zu verriegeln, wenn das Lasermarkierungsmodul an die Kupplungseinheit angekuppelt ist oder wird. Alternativ oder zusätzlich kann die Verriegelungseinrichtung dazu ausgebildet sein, das Laserschutzgehäuse oder zumindest einen Teil davon zum Bewegen in die Wartungsposition freizugeben, wenn das Lasermarkierungsmodul von der Kupplungseinheit abgekuppelt ist oder wird. Vorteilhaft kann damit eine besonders hohe Sicherheit erreicht werden.

Vorzugsweise kann die Absaugeinrichtung, die Kühleinrichtung, die Reinigungseinrichtung, die Erfassungseinrichtung, das Laserschutzgehäuse und/oder die Verriegelungseinrichtung (jeweils) als ein wechselbares Submodul auf dem Modulwagen angeordnet (und z. B. gesichert, vorzugsweise mit einem Schnellverschluss oder einem werkzeuglosen Schnellwechselsystem) sein. Vorteilhaft kann damit die Flexibilität weiter gesteigert werden, da für unterschiedliche Aufgaben bspw. unterschiedliche Submodule schnell und einfach auf dem Modulwagen angeordnet und gesichert werden können.

In einem weiteren Ausführungsbeispiel weist die Vorrichtung eine Steuereinrichtung auf, die dazu konfiguriert ist:
- die Vorrichtung in einem ersten Betriebsmodus mit mindestens einem ersten Betriebsparameter, vorzugsweise aufweisend eine erste Fördergeschwindigkeit, zu betreiben, wenn das Etikettiermodul an die Kupplungseinheit angekuppelt ist, und
- die Vorrichtung in einem zweiten Betriebsmodus mit mindestens einem zweiten Betriebsparameter, vorzugsweise aufweisend eine zweite Fördergeschwindigkeit, der sich von dem mindestens einen ersten Betriebsparameter unterscheidet, zu betreiben, wenn das Lasermarkierungsmodul an die Kupplungseinheit angekuppelt ist.

Vorteilhaft kann damit erreicht werden, dass nicht nur der Aufbau der Vorrichtung durch den modularen Ansatz schnell gewechselt werden kann, sondern auch das Steuerungskonzept schnell und automatisch an den jeweiligen Aufbau mit jeweils angepassten, optimalen Betriebsparametern gewechselt werden kann.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Beispielsweise kann es sich bei der Steuereinrichtung um eine zentrale Steuereinrichtung der Vorrichtung handeln. Alternativ kann die Steuereinrichtung dezentral verteilt angeordnet sein, z. B. teilweise an dem Lasermarkierungsmodul und/oder dem Etikettiermodul.

In einer Ausführungsform ist der Behälterförderer dazu ausgebildet, die Behälter um eine Hochachse des jeweiligen Behälters zu drehen (z. B. mittels drehbarer Behälterhalterungen des Behälterförderers). Vorzugsweise kann der mindestens eine erste Betriebsparameter eine erste Behälterdrehgeschwindigkeit und/oder ein erstes Behälterdrehprofil zum Drehen der Behälter um die Hochachse des jeweiligen Behälters aufweisen, und der mindestens eine zweite Betriebsparameter kann eine zweite Behälterdrehgeschwindigkeit, die sich von der ersten Behälterdrehgeschwindigkeit unterscheidet, und/oder ein zweites Behälterdrehprofil, das sich von dem ersten Behälterdrehprofil unterscheidet, zum Drehen der Behälter um die Hochachse des jeweiligen Behälters aufweisen. Vorteilhaft kann damit eine Drehung der Behälter und die Art der Kennzeichnung (Etikettieren und/oder Lasermarkieren) automatisch aufeinander abgestimmt werden.

In einer weiteren Ausführungsform weist die Vorrichtung ferner eine Inspektionseinrichtung auf, die dazu ausgebildet ist, die von dem Lasermarkierungsmodul auf die Behälter aufgebrachten Lasermarkierungen zu erfassen und einen Betrieb der Vorrichtung (z. B. der Steuereinrichtung) abhängig von den erfassten Lasermarkierungen anzupassen. Vorteilhaft können auf diese Weise die aufgebrachten Lasermarkierungen überwacht werden. Zudem besteht sowie die Möglichkeit zur Anpassung (z. B. Regelung oder Steuerung) bestimmter Betriebsparameter der Vorrichtung, z. B. des Behälterförderers oder des Lasermarkierungsmoduls.

Es ist möglich, dass die Absaugeinrichtung, die Kühleinrichtung, die Erfassungseinrichtung, die Reinigungseinrichtung, das Laserschutzgehäuse, die Verriegelungseinrichtung, die Steuereinrichtung und/oder die Inspektionseinrichtung ein Teil des Lasermarkierungsmoduls ist oder separat zu dem Lasermarkierungsmodul als ein Teil der Vorrichtung umfasst ist.

Ein weiterer Aspekt der vorliegenden Offenbarung betrifft eine Behälterbehandlungsanlage um Herstellen, Reinigen, Beschichten, Prüfen, Abfüllen, Verschließen, Kennzeichnen und/oder Verpacken von Behältern für flüssige Medien, vorzugsweise Getränke oder flüssige Nahrungsmittel, mit einer Vorrichtung zum Kennzeichnen wie hierin offenbart oder mit einem Lasermarkierungsmodul wie hierin offenbart.

Beispielsweise können die Behälter als Flaschen, Dosen, Kanister, Kartons, Flakons usw. ausgeführt sein.

Ein weiterer Aspekt der vorliegenden Offenbarung betrifft ein Lasermarkierungsmodul wie hierin offenbart.

Ein weiterer Aspekt der vorliegenden Offenbarung betrifft eine Vorrichtung zum Kennzeichnen von Behältern wie hierin offenbart, ohne Etikettiermodul.

Ein weiterer Aspekt betrifft ein Verfahren zum Betreiben einer Vorrichtung zum Kennzeichnen von Behältern wie hierin offenbart. Das Verfahren weist ein Betreiben der Vorrichtung in einem ersten Betriebsmodus, in dem das Etikettiermodul an die Kupplungseinheit angekuppelt ist, mit mindestens einem ersten Betriebsparameter, vorzugsweise aufweisend eine erste Fördergeschwindigkeit, eine erste Behälterdrehgeschwindigkeit und/oder ein erstes Behälterdrehprofi, auf. Das Verfahren weist ein Betreiben der Vorrichtung in einem zweiten Betriebsmodus, in dem das Lasermarkierungsmodul an die Kupplungseinheit angekuppelt ist, mit mindestens einem zweiten Betriebsparameter, vorzugsweise aufweisend eine zweite Fördergeschwindigkeit, eine zweite Behälterdrehgeschwindigkeit und/oder ein zweites Behälterdrehprofil, der sich von dem mindestens einen ersten Betriebsparameter unterscheidet, auf. Vorteilhaft können mit dem Verfahren die gleichen Vorteile erzielt werden, die bereits unter Bezugnahme auf die Vorrichtung beschrieben wurden.

Vorzugsweise können in dem zweiten Betriebsmodus von der Vorrichtung keinerlei Etiketten auf die Behälter aufgebracht werden.

Bevorzugt können in dem zweiten Betriebsmodus die Behälter von der Vorrichtung komplett etikettenlos gekennzeichnet werden, nämlich nur mittels des Lasermarkierungsmoduls lasermarkiert werden.

Beispielsweise kann in dem zweiten Betriebsmodus kein Etikettiermodul an der Vorrichtung angekuppelt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines beispielhaften Lasermarkierungssystems; und
- Figur 2: eine schematische Darstellung einer beispielhaften Vorrichtung zum Kennzeichnen von Behältern.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

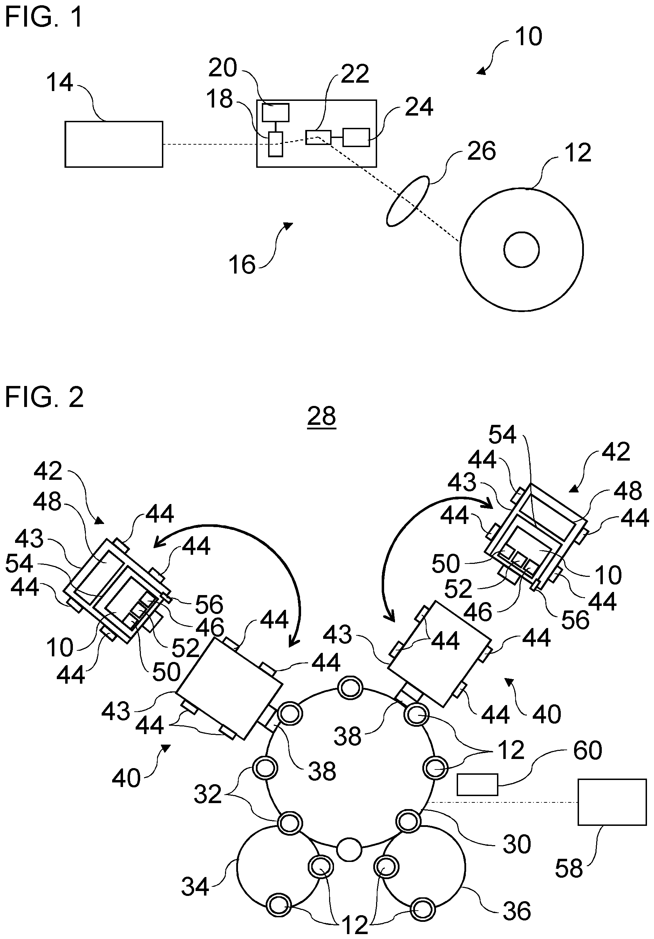

Die Figur 1 zeigt ein Lasermarkierungssystem 10 zum Lasermarkieren von Behältern 12. Das Lasermarkierungssystem 10 kann auch als Laserkennzeichnungssystem, Lasercodiersystem oder Laserbeschriftungssystem bezeichnet werden. Bevorzugt kann das Lasermarkierungssystem 10 ein COZ-Lasermarkierungssystem, ein Faser-Lasermarkierungssystem oder ein UV-Lasermarkierungssystem sein.

Bevorzugt kann das Lasermarkierungssystem 10 eine Laserquelle 14 und einen Markierkopf 16 aufweisen.

Die Laserquelle 14 kann beispielsweise als eine Laserröhre ausgeführt sein. Die Laserröhre kann versiegelt sein. Die Laserröhre kann mit einem Gas, z. B. aufweisend CO2, oder Gasgemisch, z. B. CO2-N2-He-Gasgemisch, gefüllt sein. In der Laserröhre können ebenfalls Elektroden angeordnet sein. An die Elektroden kann eine Versorgungseinheit angeschlossen sein (nicht dargestellt in Figur 1). Die Versorgungseinheit kann die Laserquelle 14 mit elektrischer Energie versorgen. Mittels einer bspw. Hochfrequenten Spannung können Moleküle, z. B. CO2-Moleküle, in der Laserröhre zum Schwingen und damit zum Aussenden eines Laserstrahls angeregt werden. Die Laserquelle 14 kann auch als Oszillator bezeichnet werden.

Der von der Laserquelle 14 erzeugte Laserstrahl kann direkt oder über Spiegel zu dem Markierkopf 16 geleitet oder gelenkt werden. Es ist möglich, dass zwischen der Laserquelle 14 und dem Markierkopf 16 beispielsweise ein sogenanntes Teleskop zum Aufweiten des Laserstrahls angeordnet ist.

Der Markierkopf 16 kann vorzugsweise zwei bewegbare Spiegel 18 und 22 sowie zwei Antriebe 20 und 24 aufweisen. Der Markierkopf 16 kann ferner eine Fokussiereinrichtung 26 aufweisen. Der Markierkopf 16 kann auch als Codierkopf, Kennzeichnungskopf oder Schreibkopf bezeichnet werden.

Der erste Antrieb 20 kann den ersten Spiegel 18 um eine erste Achse (z. B. x-Achse) drehen. Der erste Spiegel 18 kann bspw. auch als beweglicher Scanner-Spiegel, z. B. X-Scanner-Spiegel, bezeichnet werden. Der zweite Antrieb 24 kann den zweiten Spiegel 22 um eine zweite Achse (z. B. y-Achse) drehen. Der zweite Spiegel 22 kann bspw. auch als beweglicher Scanner-Spiegel, z. B. Y-Scanner-Spiegel, bezeichnet werden. Die erste Achse und die zweite Achse können bevorzugt senkrecht zueinander verlaufen.

Die durch die Antriebe 20, 24 bewegten Spiegel 18, 22 können den Laserstrahl, entsprechend der gewünschten Lasermarkierung lenken. Der Laserstrahl kann sich dadurch bspw. schreibend über die Oberfläche des Behälters 12 bewegen. Bevorzugt kann sich der Laserstrahl innerhalb eines Markierungsfeldes, das dem jeweiligen Markierkopf 16 zugeordnet ist, über die Oberfläche des Behälters 12 bewegen.

Bevor der Laserstrahl auf die Oberfläche des Behälters 12 trifft, kann er noch mittels einer Fokussiereinrichtung 26 fokussiert werden. Die Fokussiereinrichtung 26 kann hierfür bspw. eine Fokussierlinse aufweisen. Die Fokussierlinse kann auch als Kondensorlinse bezeichnet werden. Die Fokussierlinse kann beispielsweise eine F-Theta-Linse sein. Je nach Konfiguration kann die Fokussierlinse innerhalb oder außerhalb des Markierkopfes 16 angeordnet sein. Die Fokussiereinrichtung 26 kann ferner beispielsweise eine Schutzscheibe zum Schützen der Fokussierlinse aufweisen.

Es ist möglich, dass das Lasermarkierungssystem 10 mehrere Markierköpfe 16 aufweist. Die mehreren Markierköpfe 16 können bspw. seitlich nebeneinander und/oder übereinander angeordnet sein. Beispielsweise können zwei, drei oder mehr Markierköpfe 16 umfasst sein.

Jeder Markierkopf 16 kann mit einer eigenen Laserquelle 14 verbunden sein, die einen Laserstrahl zu dem jeweiligen Markierkopf 16 aussenden kann. Entsprechend kann das Lasermarkierungssystem 10 mehrere Laserquellen 14 aufweisen.

Es ist auch möglich, dass mehrere Markierköpfe 16 ihren jeweiligen Laserstrahl von derselben Laserquelle 14 empfangen. Beispielsweise kann ein Strahlverteiler zwischen der Laserquelle 14 und mehreren Markierköpfen 16 angeordnet sein. Der Strahlverteiler kann beispielsweise einen von der Laserquelle 14 empfangenen Laserstrahl in mehrere Laserstrahlen teilen und diese zu den mehreren Markierköpfen 16 leiten.

Sofern mehrere Laserquellen 14 umfasst sind, können diese bspw. baugleich ausgeführt sein. Es ist jedoch auch möglich, dass die Laserquellen 14 zumindest teilweise unterschiedlich ausgeführt sind, um unterschiedliche Effekte (z. B. Farbeffekte, haptische Effekte, Oberflächenstrukturen) beim Lasermarkieren der Behälter 12 bewirken zu können.

Die Figur 2 zeigt rein schematisch und beispielhaft eine Vorrichtung 28 zum Kennzeichnen von Behältern 12.

Die Vorrichtung 28 weist einen Behälterförderer 30, mindestens eine Kupplungseinheit 38, mindestens ein Etikettiermodul 40 und mindestens ein Lasermarkierungsmodul 42 auf. Die Vorrichtung 28 kann ferner eine Steuereinrichtung 58 aufweisen.

Der Behälterförderer 30 ist zum Transportieren von Behältern 12 ausgeführt. Der Behälterförderer 30 kann die Behälter 12 in einer Transportrichtung transportieren.

Bevorzugt kann der Behälterförderer 30 ein Rundläufer-Behälterförderer (Behälterfördererkarussell) sein. Alternativ kann der Behälterförderer 30 beispielsweise ein Linear-Behälterförderer sein (nicht in Figur 2 dargestellt).

Der Behälterförderer 30 kann die Behälter 12 beim Transportieren, vorzugsweise bodenseitig, umfangsseitig und/oder mündungsseitig, abstützen. Der Behälterförderer 30 kann Behälterhalterungen 32 zum Abstützen der Behälter 12 aufweisen. Die Behälterhalterungen 32 können die Behälter 12 vorzugsweise im Basehandling oder Neckhandling halten.

Es ist möglich, dass der Behälterförderer 30 keine gesonderten Behälterhalterungen 32 aufweist und bspw. die Behälter 12 einfach auf einem, vorzugsweise umlaufenden, Förderelement (z. B. Band, Gurt, Riemen, Ketten oder Platten) des Behälterförderers 30 abgestützt sind (nicht in Figur 2 dargestellt).

Beispielsweise können die Behälterhalterungen 32 jeweils einen Behälter 12 abstützen. Die Behälterhalterungen 32 können beispielsweise jeweils einen Behälterteller (z. B. Behälterdrehteller), eine Zentrierglocke, eine Behälterklammer und/oder eine Aufblasvorrichtung aufweisen. Beispielsweise kann je ein Behälter 12 zwischen einem Behälterteller und einer Zentrierglocke fixiert sein. Eine optionale, zusätzliche Aufblasvorrichtung kann zusätzliche Stabilität geben, z. B. wenn die Behälter 12 vor dem Füllen gekennzeichnet werden.

Bevorzugt kann der Behälterförderer 30 dazu ausgebildet sein, die transportierten Behälter 12 jeweils um eine eigene Hochachse zu drehen. Vorzugsweise können die Behälterhalterungen 32 zum Drehen der Behälter 12 um deren jeweilige Hochachse drehbar sein.

Ein Einlaufförderer 34 kann die Behälter 12 zu dem Behälterförderer 30 zuführen. Der Einlaufförderer 34 kann bspw. als ein Transferstern ausgeführt sein. Es ist möglich, dass der Einlaufförderer 34 für einen Teilungsverzug oder zum Verändern eines Teilungsverzugs ausgeführt ist.

Ein Auslaufförderer 36 kann die Behälter 12 nach dem Kennzeichnen von dem Behälterförderer 30 abtransportieren. Der Auslaufförderer 36 kann bspw. als ein Transferstern ausgeführt sein
Die mindestens eine Kupplungseinheit 38 ist zum Ankuppeln für die Module 40, 42 ausgebildet, die wiederum zum Ankuppeln an die mindestens eine Kupplungseinheit 38 ausgebildet sind.

Eine Besonderheit der vorliegenden Offenbarung kann darin bestehen, dass das (die) Etikettiermodul(e) 40 und das (die) Lasermarkierungsmodul(e) 42 an dieselbe(n) Kupplungseinheit(en) 38 kuppelbar sind. Das (die) Etikettiermodul(e) 40 und das(die) Lasermarkierungsmodul(e) 42 sind somit miteinander austauschbar an die Kupplungseinheit(en) 38 kuppelbar.

Bevorzugt weist die Vorrichtung 28 mehrere Kupplungseinheiten 38 auf, z. B. zwischen zwei und sechs Kupplungseinheiten 38. Nachfolgend ist zur Verbesserung der Lesbarkeit v.a. auf die Pluralform bezüglich der Kupplungseinheiten 38 Bezug genommen. Es versteht sich, dass die Erläuterungen gleichermaßen für Ausführungsformen gelten können, in denen lediglich eine Kupplungseinheit 38 umfasst ist.

Die Kupplungseinheiten 38 sind bevorzugt baugleich. Es ist jedoch auch möglich, dass die Kupplungseinheiten 38 zumindest teilweise unterschiedlich ausgestaltet sind.

Die Kupplungseinheiten 38 können bezüglich einer Transportrichtung des Behälterförderers 30 nacheinander und beabstandet voneinander angeordnet sein. Die Kupplungseinheiten 38 können an einer Außenseite, z. B. Außenumfangsseite, des Behälterförderers 30 angeordnet sein.

Die Kupplungseinheiten 38 können dazu ausgebildet sein, dass das jeweils ankuppelnde Modul 40, 42 beim Ankuppeln an die jeweilige Kupplungseinheit 38 angehoben wird. Beispielsweise können die Kupplungseinheiten 38 jeweils eine Hubeinrichtung aufweisen. Die Hubeinrichtungen können bspw. einen motorischen Antrieb aufweisen. Mittels einer Hubeinrichtung kann das ankuppelnde Modul 40, 42 angehoben werden. Beispielsweise kann die Hubeinrichtung beim Ankuppeln das jeweilige Modul 40, 42 in eine Betriebsposition anheben, in der das jeweilige Modul 40, 42 vorzugsweise keinen direkten Bodenkontakt mehr hat. Andererseits kann die Hubeinrichtung das jeweilige Modul 40, 42 beim Abkuppeln in eine Ausgangsposition absenken, in der das jeweilige Modul 40, 42 vorzugsweise direkten Bodenkontakt und wegbewegt werden kann.

Bevorzugt können die Kupplungseinheiten 38 zum mechanischen An- und Abkuppeln eines jeweiligen Moduls 40, 42 ausgebildet sein. Beispielsweise können die Kupplungseinheiten 38 jeweils einen Zentrierkegel (oder einen Zentrierkonus) aufweisen, der mit einem Zentrierkonus (oder einem Zentrierkegel) des jeweiligen Moduls 40, 42 zum Positionieren des jeweiligen Moduls 40, 42 zusammenpasst.

Im abgekuppelten Zustand können die Module 40, 42 über einen Untergrund bewegt, vorzugsweise gefahren, werden.

Beispielsweise können die Module 40, 42 jeweils einen bewegbaren Modulwagen 43 zum Bewegen über den Untergrund aufweisen. Die Modulwagen 43 können bevorzugt als fahrbare Untergestelle ausgeführt sein. Die Modulwagen 43 der Module 40, 42 können bevorzugt baugleich sein. Der Modulwagen 43 des Etikettiermoduls 40 kann ein wechselbares Etikettieraggregat zum Etikettieren der Behälter 12 tragen. Der Modulwagen 43 des Lasermarkierungsmoduls 42 kann das wechselbare Lasermarkierungssystem 10 tragen.

Bevorzugt können die Module 40, 42 bzw. die Modulwagen 43 jeweils mehrere Rollen 44 zum Bewegen über den Untergrund aufweisen. Bevorzugt sind die Rollen 44 in der Betriebsstellung des jeweiligen Moduls 40, 42 ohne Bodenkontakt.

Bevorzugt weist die Vorrichtung 28 mehrere Etikettiermodule 40 auf. Nachfolgend ist zur Verbesserung der Lesbarkeit v.a. auf die Pluralform bezüglich der Etikettiermodule 40 Bezug genommen. Es versteht sich, dass die Erläuterungen gleichermaßen für Ausführungsformen gelten können, in denen lediglich ein Etikettiermodul 40 umfasst ist.

Die Etikettiermodule 40 sind zum Applizieren von Etiketten auf die Behälter 12 ausgebildet. Im Einzelnen können die Etikettiermodule 40 dann Etiketten auf die Behälter 12 applizieren, wenn sie an den Kupplungseinheiten 38 angekuppelt sind.

Die Etikettiermodule 40 können bspw. Papier- oder Kunststoffetiketten auf die Behälter 12 aufbringen. Die Etiketten können bspw. mit Heißleim oder Kaltleim oder selbstklebend auf die Behälter 12 aufgebracht werden.

Bevorzugt weist die Vorrichtung 28 mehrere Lasermarkierungsmodule 42 auf. Nachfolgend ist zur Verbesserung der Lesbarkeit v.a. auf die Pluralform bezüglich der Lasermarkierungsmodule 42 Bezug genommen. Es versteht sich, dass die Erläuterungen gleichermaßen für Ausführungsformen gelten können, in denen lediglich ein Lasermarkierungsmodul 42 umfasst ist.

Die Lasermarkierungsmodule 42 sind zum Lasermarkieren der Behälter 12 ausgebildet. Im Einzelnen können die Lasermarkierungsmodule 42 dann Lasermarkierungen auf die Behälter 12 aufbringen, wenn sie an den Kupplungseinheiten 38 angekuppelt sind.

Die Lasermarkierungsmodule 42 weisen jeweils ein Lasermarkierungssystem 10 mit jeweils einem oder mehreren Markierköpfen 16 (siehe Figur 1) auf. Bevorzugt kann eine Position mindestens eines Markierkopfes 16 des Lasermarkierungssystems 10 verstellbar sein. Die Verstelleinrichtung zum Verstellen der Position des mindestens eines Markierkopfes 16 kann bspw. manuell betätigt oder motorisch angetrieben sein. Die Verstelleinrichtung weist bevorzugt eine Führung auf, mit der der mindestens eine Markierkopf 16 beim Verstellen geführt werden kann. Beispielsweise kann der mindestens ein Markierkopf 16 höhenverstellbar sein. Alternativ oder zusätzlich kann der mindestens eine Markierkopf 16 bspw. quer zu einer Transportrichtung des Behälterförderers 30 und/oder längs zu einer Transportrichtung des Behälterförderers 30 verstellbar sein.

Bevorzugt sind die Lasermarkierungsmodule 42 baugleich. Bevorzugt sind die Lasermarkierungsmodule 42 so eingestellt, dass sie unterschiedliche Abschnitte der Behälter 12 markieren können, z. B. mehrere übereinander angeordnete Abschnitte. Beispielsweise kann ein Markierkopf 16 (siehe Figur 1) eines Lasermarkierungsmoduls 42 in einer höheren Position positioniert sein als ein Markierkopf 16 (siehe Figur 1) eines weiteren Lasermarkierungsmoduls 42. Zum Einstellen kann bspw. die zuvor erläuterte Verstellbarkeit bzw. Verstelleinrichtung genutzt werden.

Die Lasermarkierungsmodule 42 können besonders bevorzugt weitere Einrichtungen aufweisen, mit denen sich ein Betrieb des jeweiligen Lasermarkierungsmoduls 42 verbessern lässt. Beispielsweise können die Lasermarkierungsmodule 42 jeweils eine Absaugeinrichtung 46, eine Kühleinrichtung 48, eine Erfassungseinrichtung 50, eine Reinigungseinrichtung 52, ein Laserschutzgehäuse 54 und/oder eine Verriegelungseinrichtung 56 aufweisen.

Besonders bevorzugt kann das Lasermarkierungssystem 10, die Absaugeinrichtung 46, die Kühleinrichtung 48, die Erfassungseinrichtung 50, die Reinigungseinrichtung 52, das Laserschutzgehäuse 54 und/oder die Verriegelungseinrichtung 56 jeweils als ein wechselbares Submodul zum bedarfsweise Anordnen auf dem Modulwagen 43 ausgeführt sein, z. B. mittels eines, vorzugsweise werkzeuglosen, Schnellwechselsystems. Der Modulwagen 43 kann mindestens eine Submodulaufnahme zum Aufnehmen mindestens eines Submoduls aufweisen.

Die Absaugeinrichtung 46 kann zum Absaugen von beim Lasermarkieren entstehenden Dämpfen ausgebildet sein.

Beispielsweise kann die Absaugeinrichtung 46 auf ein Markierfeld des Lasermarkierungssystems 10 gerichtet sein, wenn das jeweilige Lasermarkierungsmodul 42 an die Kupplungseinheit 38 angekuppelt ist. Vorzugsweise ist die Absaugeinrichtung 46 oberhalb von dem mindestens einen Markierkopf 16 (siehe Figur 1) und/oder dem Behälterförderer 30 angeordnet, wenn das jeweilige Lasermarkierungsmodul 42 an die Kupplungseinheit 38 angekuppelt ist.

Die Absaugeinrichtung 46 kann vorzugsweise innerhalb des Laserschutzgehäuses 54 angeordnet sein. Die Absaugeinrichtung 46 kann in einer Wartungsposition des Laserschutzgehäuses 54 zugänglich sein.

Die Absaugeinrichtung 46 kann bspw. einen Lüfter und ein Rohrsystem aufweisen. Der Lüfter kann abgesaugte Dämpfe vom Lasermarkieren durch das Rohrsystem fördern. Im Rohrsystem kann bspw. ein Filter umfasst sein. Das Rohrsystem kann in die Umgebung oder ein Reservoir, z. B. Tank, münden.

Die Kühleinrichtung 48 kann zum Kühlen der Laserquelle 14 des Lasermarkierungssystems 10 mit der Laserquelle 14 wärmeübertragend verbunden sein. Die Kühleinrichtung 48 kann bspw. eine Luft-Kühleinrichtung, eine Flüssigkeit-Kühleinrichtung oder eine Elektro-Kühleinrichtung sein. Vorzugsweise kann die Kühleinrichtung 48 eine Kühlflüssigkeit, z. B. Kühlwasser, in einem Kühlkreislauf führen. Ein erster Wärmeübertrager kann die Laserquelle 14 mit dem Kühlkreislauf zum Kühlen der Laserquelle 14 wärmeübertragend verbinden. Ein zweiter Wärmeübertrager kann den Kühlkreislauf mit einer Umgebung wärmeübertragend verbinden. Bevorzugt kann der zweite Wärmeübertrager durch einen Lüfter mit Umgebungsluft angeströmt werden.

Vorzugsweise kann die Kühleinrichtung 48 zumindest teilweise außerhalb des Laserschutzgehäuses 54 angeordnet sein, z. B. um die Wartung zu erleichtern. Beispielsweise kann der zweite Wärmeübertrager und optional auch der erste Wärmeübertrager außerhalb des Laserschutzgehäuses 54 angeordnet sein.

Die Erfassungseinrichtung 50 kann zum behälterindividuellen Erfassen einer Position und/oder Orientierung eines jeweiligen Markierungsbereichs der Behälter 12 ausgebildet sein. Die Erfassungseinrichtung 50 kann bspw. mindestens eine Kamera aufweisen. Die Erfassungseinrichtung 50 kann auf den Behälterförderer gerichtet sein, wenn das Lasermarkierungsmodul 42 an die Kupplungseinheit 38 angekuppelt ist.

Mittels der erfassten Position und/oder Orientierung des jeweiligen Markierungsbereichs kann eine Steuereinrichtung 58 einen Betrieb des Lasermarkierungssystems 10, vorzugsweise behälterindividuell, anpassen.

Bevorzugt kann die Erfassungseinrichtung 50 außerhalb des Laserschutzgehäuses 54 angeordnet sein.

Die Reinigungseinrichtung 52 kann zum automatischen Reinigen der Fokussiereinrichtung 26 des Lasermarkierungssystems 10 ausgebildet sein. Im Einzelnen kann die Reinigungseinrichtung 52 beispielsweise eine Fokussierlinse und/oder eine Schutzscheibe der Fokussiereinrichtung 26 automatisch reinigen.

Beispielsweise kann die Reinigungseinrichtung 52 die Fokussiereinrichtung 26 in regelmäßigen Zeitabständen und/oder nach Auslösung mittels einer Benutzereingabeeinrichtung reinigen.

Die Reinigungseinrichtung 52 kann die Fokussiereinrichtung 26 beispielsweise mittels einer Düse mit einem Reinigungsfluid, z. B. Luft oder Reinigungsflüssigkeit, besprühen. Die Düse kann beispielsweise über einen Verdichter mit der Umgebung oder über eine Pumpe mit einem Reinigungsflüssigkeitstank verbunden sein. Alternativ oder zusätzlich kann die Reinigungseinrichtung 52 die Fokussiereinrichtung 26 bspw. mit einem Gewebe oder einem (z. B. Scheiben-) Wischer reinigen, z. B. abwischen.

Bevorzugt kann die Reinigungseinrichtung 52 innerhalb des Laserschutzgehäuses 54 angeordnet sein. Die Reinigungseinrichtung 52 kann in einer Wartungsposition des Laserschutzgehäuses 54 zugänglich sein.

Das Laserschutzgehäuse 54 kann zum Abschirmen des Laserkennzeichnens der Behälter 12 ausgebildet sein. Beispielsweise kann das Laserschutzgehäuse 54 Gehäusewände und/oder abgetönte Scheiben zum Abschirmen des Laserkennzeichnens aufweisen.

Das Laserschutzgehäuse 54 ist vorzugsweise zwischen einer Betriebsposition und einer Wartungsposition bewegbar. Die Bewegung kann manuell oder automatisch bewirkt werden. Die Bewegung des Laserschutzgehäuse 54 kann durch eine (z. B. Vertikal-) Führung geführt sein. Vorzugsweise ist das Laserschutzgehäuse 54 aus der Betriebsposition zu der Wartungsposition anhebbar und aus der Wartungsposition zu der Betriebsposition absenkbar.

Vorzugsweise kann die Laserquelle 14, der Markierkopf 16 und/oder die Fokussiereinrichtung 26 in der Betriebsposition geschützt in dem Laserschutzgehäuse 54 angeordnet sein. In der Wartungsposition kann die Laserquelle 14, der Markierkopf 16 und/oder die Fokussiereinrichtung 26 zugänglich sein.

Die optionale Verriegelungseinrichtung 56 kann zum Verriegeln des Laserschutzgehäuses 54 in der Betriebsposition ausgebildet sein. Die Verriegelungseinrichtung 56 kann beispielsweise eine mechanische und/oder elektronische Verriegelungseinrichtung sein.

Beispielsweise kann die Verriegelungseinrichtung 56 elektronisch mit einer entsprechenden Sensorik o.Ä. überwachen, ob das Lasermarkierungsmodul 42 an die Kupplungseinheit 38 angekuppelt ist oder nicht. Es ist auch möglich, dass die Verriegelungseinrichtung 56 bspw. einen mechanischen Schalter aufweist, der beim Ankuppeln an die Kupplungseinheit 38 oder beim Abkuppeln von der Kupplungseinheit 38 betätigt wird.

Vorzugweise kann die Verriegelungseinrichtung 56 das Laserschutzgehäuse 54 in der Betriebsposition verriegeln, wenn das Lasermarkierungsmodul 42 an die Kupplungseinheit 38 angekuppelt ist oder wird und/oder das Laserschutzgehäuse 54 zum Bewegen in die Wartungsposition freigeben, wenn das Lasermarkierungsmodul 42 von der Kupplungseinheit 38 abgekuppelt ist oder wird.

Die Verriegelung des Laserschutzgehäuses 54 in der Betriebsposition mittels der Verriegelungseinrichtung 56 kann bspw. elektronisch und/oder mechanisch erfolgen. Beispielsweise kann die Verriegelungseinrichtung 56 eine elektrische Versorgungsleitung zu einem Antrieb zum Bewegen des Laserschutzgehäuses 54 unterbrechen. Es ist auch möglich, dass ein bewegbarer Riegel o.Ä. der Verriegelungseinrichtung 56 das Laserschutzgehäuse 54 in der Betriebsstellung blockiert.

Alternativ oder zusätzlich zu dem Laserschutzgehäuse 54 des Lasermarkierungsmoduls 42 ist es ebenfalls möglich, dass der Behälterförderer 30 und/oder ein Maschinengestell der Vorrichtung 28 mit einer Schutzeinrichtung zum Abschirmen des Laserkennzeichnens ausgestattet ist, z. B. in mindestens einem Zwischenraum zwischen benachbarten Kupplungseinheiten 38.

Die Steuereinrichtung 58 kann dazu konfiguriert sein, die Vorrichtung 28 in einem ersten Betriebsmodus zu betreiben, wenn mindestens ein Etikettiermodul 40 an die oder den Kupplungseinheiten 38 angekuppelt ist, und in einem zweiten Betriebsmodus zu betreiben, wenn mindestens ein Lasermarkierungsmodul 42 an die oder den Kupplungseinheiten 38 angekuppelt ist.

Im ersten Betriebsmodus kann die Vorrichtung 28 mit anderen Betriebsparametern betrieben werden als im zweiten Betriebsmodus. Beispielsweise kann in dem ersten Betriebsmodus eine Behälterfördergeschwindigkeit, eine Behälterdrehgeschwindigkeit (bezüglich eines Drehens um eine Hochachse des jeweiligen Behälters 12) und/oder ein Behälterdrehprofil einen jeweils anderen Wert aufweisen als im zweiten Betriebsmodus. Im Behälterdrehprofil kann bspw. angegeben sein, ob die Behälter 12 überhaupt um eine eigene Hochachse gedreht werden, wann die Behälter 12 um eine eigene Hochachse gedreht werden, wie lange die Behälter 12 um eine eigene Hochachse gedreht werden, mit welcher Geschwindigkeit die Behälter 12 um die eigene Hochachse gedreht werden und/oder um welchen Drehwinkel die Behälter 12 um die eigene Hochachse gedreht werden, z. B. von den Behälterhalterungen 32.

Optional kann die Vorrichtung 28 ferner eine, vorzugsweise kameragestützte, Inspektionseinrichtung 60 aufweisen. Die Inspektionseinrichtung 60 kann die von dem Lasermarkierungsmodul 42 auf die Behälter 12 aufgebrachten Lasermarkierungen erfassen und bspw. bezüglich Qualität usw. kontrollieren bzw. auswerten. Abhängig von der Auswertung kann ein Betrieb der Vorrichtung 28 (z. B. über die Steuereinrichtung 58) angepasst werden. Beispielsweise kann eine Behältertransportgeschwindigkeit des Behälterförderers 30 oder eine Behälterdrehgeschwindigkeit des Behälterförderers 30 verringert werden, wenn erkannt wird, dass die aufgebrachten Lasermarkierungen unvollständig sind, oder es kann eine Warnung über eine Ausgabeeinrichtung an einen Benutzer ausgegeben werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Behälterförderers, der Kupplungseinheit, des Etikettiermoduls und/oder des Lasermarkierungsmoduls des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Lasermarkierungssystem
- 12: Behälter
- 14: Laserquelle
- 16: Markierkopf
- 18: erster Spiegel
- 20: erster Antrieb
- 22: zweiter Spiegel
- 24: zweiter Antrieb
- 26: Fokussiereinrichtung
- 28: Vorrichtung zum Kennzeichnen von Behältern
- 30: Behälterförderer
- 32: Behälterhalterung
- 34: Einlaufförderer
- 36: Auslaufförderer
- 38: Kupplungseinheit
- 40: Etikettiermodul
- 42: Lasermarkierungsmodul
- 43: Modulwagen
- 44: Rolle
- 46: Absaugeinrichtung
- 48: Kühleinrichtung
- 50: Erfassungseinrichtung
- 52: Reinigungseinrichtung
- 54: Laserschutzgehäuse
- 56: Verriegelungseinrichtung
- 58: Steuereinrichtung
- 60: Inspektionseinrichtung

## Patentansprüche

1. Vorrichtung (28), vorzugsweise Rundläufer-Vorrichtung, zum Kennzeichnen von Behältern (12) für eine Behälterbehandlungsanlage, wobei die Vorrichtung (28) aufweist:
einen Behälterförderer (30), vorzugsweise Rundläufer-Behälterförderer, zum Transportieren der Behälter (12);
eine Kupplungseinheit (38);
ein Etikettiermodul (40), das zum Applizieren von Etiketten auf die von dem Behälterförderer (30) transportierten Behälter (12) an die Kupplungseinheit (38) kuppelbar ist; und
ein Lasermarkierungsmodul (42), das zum Lasermarkieren der von dem Behälterförderer (30) transportierten Behälter (12) an die Kupplungseinheit (38) kuppelbar ist,
wobei das Etikettiermodul (40) und das Lasermarkierungsmodul (42) miteinander austauschbar an die Kupplungseinheit (38) kuppelbar sind.

2. Vorrichtung (28) nach Anspruch 1, ferner aufweisend:
eine weitere Kupplungseinheit (38), die bezüglich einer Behältertransportrichtung des Behälterförderers (30) vor oder hinter der Kupplungseinheit (38) angeordnet ist; und
ein weiteres Lasermarkierungsmodul (42), das zum Lasermarkieren der von dem Behälterförderer (30) transportierten Behälter (12) an die weitere Kupplungseinheit (38) kuppelbar ist, wobei optional:
die Kupplungseinheit (38) und die weitere Kupplungseinheit (38) baugleich sind; und/oder
das Lasermarkierungsmodul (42) und das weitere Lasermarkierungsmodul (42) baugleich sind.

3. Vorrichtung (28) nach Anspruch 1 oder Anspruch 2, wobei:
das Etikettiermodul (40) und das Lasermarkierungsmodul (42) Rollen (44) zum Bewegen über einen Untergrund aufweisen; und/oder
die Kupplungseinheit (38) dazu ausgebildet ist, dass das Etikettiermodul (40) beim Ankuppeln an die Kupplungseinheit (38) angehoben wird und dass das Lasermarkierungsmodul (42) beim Ankuppeln an die Kupplungseinheit (38) angehoben wird.

4. Vorrichtung (28) nach einem der vorherigen Ansprüche, wobei:
das Lasermarkierungsmodul (42) einen bewegbaren Modulwagen (43) und ein Lasermarkierungssystem (10) zum Lasermarkieren, das als ein wechselbares Submodul auf dem Modulwagen (43) angeordnet ist, aufweist.

5. Vorrichtung (28) nach einem der vorherigen Ansprüche, wobei:
das Lasermarkierungsmodul (42) mindestens einen Markierkopf (16) zum Lasermarkieren der Behälter (12) aufweist, wobei eine Position des mindestens einen Markierkopfes (16) verstellbar ist, vorzugsweise höhenverstellbar, quer zu einer Transportrichtung des Behälterförderers (30), längs zu einer Transportrichtung des Behälterförderers (30) und/oder radial zum Behälterförderer (30).

6. Vorrichtung (28) nach einem der vorherigen Ansprüche, wobei:
das Lasermarkierungsmodul (42) mehrere Markierköpfe (16) zum Lasermarkieren unterschiedlicher Bereiche der Behälter (12) aufweist, und optional:
- die mehreren Markierköpfe (16) übereinander oder seitlich nebeneinander angeordnet sind; und/oder
- die mehreren Markierköpfe (16) sich eine Laserquelle (14) und optional weitere Peripherie, wie beispielsweise ein Kühlsystem, teilen.

7. Vorrichtung (28) nach einem der vorherigen Ansprüche, wobei:
das Lasermarkierungsmodul (42) eine Absaugeinrichtung (46) zum Absaugen von beim Lasermarkieren entstehenden Dämpfen aufweist.

8. Vorrichtung (28) nach einem der vorherigen Ansprüche, wobei:
das Lasermarkierungsmodul (42) eine Kühleinrichtung (48), die zum Kühlen einer Laserquelle (14) des Lasermarkierungsmoduls (42) mit der Laserquelle (14) wärmeübertragend verbunden ist, vorzugsweise zum Kühlen der Laserquelle (14) mit Kühlwasser, aufweist.

9. Vorrichtung (28) nach einem der vorherigen Ansprüche, wobei:
das Lasermarkierungsmodul (42) eine Reinigungseinrichtung (52) zum automatischen Reinigen einer Fokussiereinrichtung (26) des Lasermarkierungsmoduls (42) aufweist; und/oder
das Lasermarkierungsmodul (42) eine, vorzugsweise kameragestützte, Erfassungseinrichtung (50) zum behälterindividuellen Erfassen einer Position und/oder Orientierung eines Markierungsbereichs der Behälter (12) zum Anpassen des Lasermarkierens an die erfasste Position und/oder Orientierung aufweist.

10. Vorrichtung (28) nach einem der vorherigen Ansprüche, wobei:
das Lasermarkierungsmodul (42) ein Laserschutzgehäuse (54) zum Abschirmen des Laserkennzeichnens der Behälter (12) aufweist.

11. Vorrichtung (28) nach Anspruch 10, wobei:
das Laserschutzgehäuse (54) oder zumindest ein Teil davon zwischen einer Betriebsposition und einer Wartungsposition, vorzugsweise geführt, bewegbar, vorzugsweise anhebbar und absenkbar, ist.

12. Vorrichtung (28) nach Anspruch 11, wobei:
das Lasermarkierungsmodul (42) eine, vorzugsweise mechanische und/oder elektronische, Verriegelungseinrichtung (56) zum Verriegeln des Laserschutzgehäuses (54) oder zumindest eines Teils davon in der Betriebsposition aufweist, wobei die Verriegelungseinrichtung (56) dazu ausgebildet ist:
- das Laserschutzgehäuse (54) oder zumindest einen Teil davon in der Betriebsposition zu verriegeln, wenn das Lasermarkierungsmodul (42) an die Kupplungseinheit (38) angekuppelt ist oder wird; und/oder
- das Laserschutzgehäuse (54) oder zumindest einen Teil davon zum Bewegen in die Wartungsposition freizugeben, wenn das Lasermarkierungsmodul (42) von der Kupplungseinheit (38) abgekuppelt ist oder wird.

13. Vorrichtung (28) nach einem der vorherigen Ansprüche, ferner aufweisend:
eine Steuereinrichtung (58), die dazu konfiguriert ist:
- die Vorrichtung (28) in einem ersten Betriebsmodus mit mindestens einem ersten Betriebsparameter, vorzugsweise aufweisend eine erste Fördergeschwindigkeit, zu betreiben, wenn das Etikettiermodul (40) an die Kupplungseinheit (38) angekuppelt ist, und
- die Vorrichtung (28) in einem zweiten Betriebsmodus mit mindestens einem zweiten Betriebsparameter, vorzugsweise aufweisend eine zweite Fördergeschwindigkeit, der sich von dem mindestens einen ersten Betriebsparameter unterscheidet, zu betreiben, wenn das Lasermarkierungsmodul (42) an die Kupplungseinheit (38) angekuppelt ist.

14. Vorrichtung (28) nach Anspruch 13, wobei:
der Behälterförderer (30) dazu ausgebildet ist, die Behälter (12) um eine Hochachse des jeweiligen Behälters (12) zu drehen;
der mindestens eine erste Betriebsparameter eine erste Behälterdrehgeschwindigkeit und/oder ein erstes Behälterdrehprofil zum Drehen der Behälter (12) um die Hochachse des jeweiligen Behälters (12) aufweist; und
der mindestens eine zweite Betriebsparameter eine zweite Behälterdrehgeschwindigkeit, die sich von der ersten Behälterdrehgeschwindigkeit unterscheidet, und/oder ein zweites Behälterdrehprofil, das sich von dem ersten Behälterdrehprofil unterscheidet, zum Drehen der Behälter (12) um die Hochachse des jeweiligen Behälters (12) aufweist.

15. Vorrichtung (28) nach einem der vorherigen Ansprüche, ferner aufweisend:
eine Inspektionseinrichtung (60), die dazu ausgebildet ist, die von dem Lasermarkierungsmodul (42) auf die Behälter (12) aufgebrachten Lasermarkierungen zu erfassen und einen Betrieb der Vorrichtung (28) abhängig von den erfassten Lasermarkierungen anzupassen.

16. Verfahren zum Betreiben einer Vorrichtung (28) zum Kennzeichnen von Behältern (12) nach einem der vorherigen Ansprüche, wobei das Verfahren aufweist:
Betreiben der Vorrichtung (28) in einem ersten Betriebsmodus, in dem das Etikettiermodul (40) an die Kupplungseinheit (38) angekuppelt ist, mit mindestens einem ersten Betriebsparameter, vorzugsweise aufweisend eine erste Fördergeschwindigkeit, eine erste Behälterdrehgeschwindigkeit und/oder ein erstes Behälterdrehprofil; und
Betreiben der Vorrichtung (28) in einem zweiten Betriebsmodus, in dem das Lasermarkierungsmodul (42) an die Kupplungseinheit (38) angekuppelt ist, mit mindestens einem zweiten Betriebsparameter, vorzugsweise aufweisend eine zweite Fördergeschwindigkeit, eine zweite Behälterdrehgeschwindigkeit und/oder ein zweites Behälterdrehprofil, der sich von dem mindestens einen ersten Betriebsparameter unterscheidet.
